# EUROPÄISCHE PATENTSCHRIFT

(11) **EP 3 223 960 B1**
(45) Veröffentlichungstag und Bekanntmachung des Hinweises auf die Patenterteilung: **14.10.2020**
(21) Anmeldenummer: 15817767.5
(22) Anmeldetag: 27.11.2015
(51) Int. Cl.: B05B 11/00, G01F 11/10, G01F 11/20, G01F 11/22, G01F 11/26, G01F 11/44

(54) **VORRICHTUNG ZUM AUSBRINGEN EINES FLÜSSIGEN MEDIUMS**
DEVICE FOR DISPENSING A LIQUID MEDIUM
DISPOSITIF DE DISTRIBUTION D'UN MILIEU LIQUIDE

(30) Priorität: 27.11.2014 DE 102014117390
(43) Veröffentlichungstag der Anmeldung: 04.10.2017
(73) Patentinhaber: F + K Innovationen GmbH & Co.KG, 76543 Baden-Baden (DE)
(72) Erfinder: FUCHS, Karl-Heinz, 78315 Radolfzell (DE)
(74) Vertreter: Patentanwälte und Rechtsanwalt Weiß, Arat & Partner mbB
(86) Internationale Anmeldenummer: PCT/EP2015/077880
(87) Internationale Veröffentlichungsnummer: WO 2016/083559

(56) Entgegenhaltungen:
- EP-A2- 0 649 684
- DE-C- 675 171
- FR-A1- 2 589 235
- GB-A- 402 132

## Beschreibung

Die Erfindung betrifft eine Vorrichtung zum Ausbringen eines flüssigen Mediums nach dem Oberbegriff des Anspruchs 1.

### Stand der Technik

Aus dem Stand der Technik sind Tropfsysteme auf Flaschen bekannt, welche in der Überkopfposition funktionieren, indem sich ein einzelner Tropfen aus dem Flaschenhals mit integriertem Tropfeinsatz ablöst. In diesem Zusammenhang wird auf die DE 10 2011 106 261 A1 hingewiesen. GB 402,132 A beschreibt eine andere Vorrichtung gemäß dem Stand der Technik.

Die bekannten Systeme haben alle Probleme mit der Flaschenbelüftung, so dass je nach Flaschenposition und Oberflächenspannung der zu dosierenden Flüssigkeit ein Tropfen gefördert wird oder auch nicht.

Wenn der Anwender die Flasche während des Tropfenvorganges schüttelt, können auch mehrere Tropfen gleichzeitig aus dem Tropfeneinsatz austreten.

Wenn z.B. der Beipackzettel 20 Tropfen vorschreibt, muss der Anwender die gewünschte Tropfenmenge abzählen. Bei ständig auftretenden Störungen des Systems, es tropft nicht, es kommen mehrere Tropfen auf einmal, wird das Zählen sehr mühsam und der Verbraucher lässt sich von seiner Mengeneinschätzung und Gefühl leiten.

### Aufgabe der Erfindung.

Aufgabe der Erfindung ist es eine Vorrichtung zur Verfügung zu stellen, welche die Nachteile des Standes der Technik überwindet.

### Lösung der Aufgabe.

Zur Lösung der Aufgabe führen die Merkmale des Anspruches 1.

Eine erfindungsgemässe Vorrichtung zum Ausbringen eines flüssigen Mediums dient dem Ausbringen von einer bestimmten Anzahl von Tropfen eines Mediums aus einem Behältnis. Das Behältnis besteht dabei regelmässig aus Glas oder Kunststoff. Das Behältnis wird dabei über übliche Verbindungsmethoden mit einem Gehäuse verbunden. Das Gehäuse kann beispielsweise aufgeschraubt oder aufgeclipst werden. Das Gehäuse beinhaltet eine darin aufgenommene Dosiertrommel und eine Dichtscheibe.

Daneben weist das Gehäuse einen Trommelauslass und eine Systembelüftung auf und die Dichtscheibe weist eine Belüftungsöffnung und einen Trommeleinlass auf. Die Dosiertrommel wiederum weist eine Dosierkammer, einen Kammerauslass und einen Kammereinlass auf. Es handelt sich hierbei regelmässig um Bohrungen oder Öffnungen, die dem Durchfluss des flüssigen Mediums oder dem Durchleiten Von Luft dienen.

Die Dosiertrommel umfasst einen Drehschieber. Der Drehschieber ist im Halbkreis drehbar an dem Gehäuse angeordnet. Dabei ist er ähnlich einem Drehverschluss einer Flasche drehbar, wobei aber keine 360°-Drehung, sondern nur eine 180° bis 270°-Drehung stattfindet.

Der Drehschieber ist derart eingestellt, dass er in einer ersten Arbeitsposition den Trommeleinlass mit dem Kammereinlass verbindet und den Kammerauslass schliesst und dabei eine Belüftung des Behältnisses und eine Entlüftung der Dosierkammer erfolgt. Bei der ersten Arbeitsposition handelt es sich in der Regel im Wesentlichen um den ersten Endpunkt der Drehbewegung des Drehschiebers. Der Drehschieber ist fest mit der Dosiertrommel verbunden. Das bedeutet, dass die Dosiertrommel die vom Drehschieber vorgegebene Bewegung nachvollzieht.

In der zweiten Arbeitsposition des Drehschiebers ist die Anordnung derart, dass die Dosiertrommel den Kammereinlass schliesst und den Trommelauslass mit dem Kammerauslass verbindet und dabei eine weitere Belüftung der Dosierkammer erfolgt und der Belüftungskanal mit der Systembelüftung verbunden ist. Bei der zweiten Arbeitsposition handelt es sich im Wesentlichen um den zweiten Endpunkt der Drehbewegung des Drehschiebers.

Zwischenstellungen zwischen der ersten Arbeitsposition und der zweiten Arbeitsposition gewährleisten zwar auch ein Funktionieren der Vorrichtung, allerdings erhöht sich die Funktionalität je näher die beiden Endpositionen der Drehbewegung erreicht werden.

Weiter weist der Trommelauslass einen Belüftungskanal auf, welcher der Belüftung des gesamten Systems dienen soll. Durch den Belüftungskanal wird je nach Stellung der Dosiertrommel entweder die Dosierkammer oder das Behältnis mit Luft von aussen versorgt, wobei der Belüftungskanal je nach Arbeitsposition entweder mit der eine Verbindung zwischen der Dosierkammer und der Aussenatmosphäre zur Entlüftung herstellt oder eine Verbindung zwischen der Aussenatmosphäre und dem Inneren des Behältnisses herstellt.

Zwischen dem Behältnis und der Dosiertrommel ist eine Dichtscheibe angeordnet, wobei die Dichtscheibe statisch zu der Dosiertrommel ist. Das bedeutet, dass sich die Dosiertrommel relativ zu der Dichtscheibe dreht. Dazu weist die Dichtscheibe Verdrehsicherungen auf, die entweder in dem Gehäuse aufgenommen werden oder an dem Behältnishals.

Die Dichtscheibe umfasst den Trommeleinlass und eine Belüftungsöffnung. Ausserdem ist die Dosierkammer derart ausgeführt, dass in der ersten Arbeitsposition ein Bypass zu dem Belüftungskanal anordnebar ist. In der zweiten Arbeitsposition ist ein weiterer Bypass zwischen der Dosierkammer und dem Belüftungskanal anordnebar ist. Di Bypässe ermöglichen ein besseres Funktionieren der Belüftung der einzelnen Teile je nach Arbeitsposition der Dosiertrommel.

Der Belüftungskanal ist in der ersten Arbeitsposition mit der Belüftungsöffnung der Dichtscheibe in Wirkverbindung bringbar ist. Weiter ist die Dosierkammer und der Kammereinlass in der Dosiertrommel exzentrisch angeordnet sind.

Der Belüftungskanal ist in der Dosiertrommel exzentrisch angeordnet. Die Belüftungsöffnung und der Trommeleinlass ist in der Dichtscheibe exzentrisch angeordnet. Das ermöglicht eine bessere Funktionalität der einzelnen Teile bei der Drehbewegung der Dosiertrommel.

Die Dosierkammer ist von dem Kammereinlass zu dem Kammerauslass verjüngt. Dies hat den Vorteil, dass die Oberflächenspannung des zu dosierenden flüssigen Mediums besser aufgebrochen werden kann und ein besseres Herausfliessen des flüssigen Mediums ermöglicht wird.

Die Dosiertrommel ist in dem Gehäuse drehbar angeordnet. Die Dosiertrommel ist zu dem Gehäuse abgedichtet.

Daneben wird Schutz für eine Verwendung einer Vorrichtung zum Ausbringen eines flüssigen Mediums durch folgende Schritte beansprucht:
- die Vorrichtung wird in eine Füllstellung gebracht;
- der Drehschieber wird in die erste Arbeitsposition gedreht, sodass die Dosierkammer aus dem Behältnis gefüllt wird;
- der Drehschieber wird in die zweite Arbeitsposition gedreht, sodass die Dosierkammer über den Trommelauslass entleert wird.

Mit der neuen Idee soll dem Benutzer, Anwender immer ein fest eingestelltes Volumen, Tropfenmenge zur Verfügung gestellt werden mit dem Hintergrund, dass der Verbraucher das gleiche Handling (Überkopfanwendung) wie bei den bekannten Tropfersystemen zur Verfügung hat.

Für den Medikamentenhersteller sollte die Idee ebenfalls zu mehr Sicherheit bei der Produktapplikation beitragen, da eine ungewollte Unter- bzw. Überdosierung aufgrund des Verzählens der Tropfen durch den Anwender bzw. System tropft oder tropft nicht, nicht mehr möglich ist.

Um verschiedene Tropfenmengen, Dosiermengen zu applizieren, wird der Pharmaindustrie das System mit verschiedenen vordosierenden Tropfenmengen z.B. 5, 10, 20 Tropfen als Gesamttropfenvolumen angeboten.

Die erfindungsgemäße Vorrichtung dient zum Dosieren einer gewünschten Tropfenmenge von flüssigen Produkten. Es kann sich dabei um Medikamente, Kosmetika, Öle, flüssige Produkte handeln.

Das Dosiersystem kann auf Glasflaschen, Kunststoffflaschen, Tuben oder sonstige Behältnisse zum Einsatz kommen.

Die erfindungsgemäße Vorrichtung stellt einen auf ein Behältnis aufbringbaren Tropfendosierer als Reservoirdosierer von mehreren zusammen gefassten Tropfen als Dosiervolumen dar.

Aufbringbar bedeutet hierbei, dass der Tropfendosierer auf eine Flasche oder ähnliches Behältnis aufgeschraubt, aufgeklemmt, aufgeclinscht oder auf eine andere Weise aufgebracht werden kann.

Bei dem erfindungsgemäßen Tropfendosierer ist eine Dosiertrommel im Tropfendosiergehäuse integriert, welche sich in der Längsachse des Systems radial manuell drehen lässt.

Das bedeutet im Einzelnen, dass der Tropfendosierer die Dosiertrommel aufnimmt. Die Trommel ist drehbar an oder in dem Tropfendosierer angeordnet. Die Dosiertrommel weist eine Dosierkammer auf, welche außerhalb der Systemachse längs angeordnet ist und sich somit um die Längsachse der Dosiertrommel dreht.

Um die verschiedenen Systemfunktionen zu gewährleisten, wie belüften und entlüften der Dosierkammer und Flasche sowie das Ausbringen der dosierten Flüssigkeitsmenge aus der Dosierkammer mit der benötigten Luftumleitung in Verbindung mit der Systemdichtigkeit, dreht die Dosierkammer in der Trommel um die Mittelachse.
Die Belüftungsbohrungen, Ausgussöffnung und Flüssigkeitszulauf sind ebenfalls außerhalb der zentralen Systemachse angeordnet.

Größe, Ausmaß, Volumen, Inhalt oder die Oberflächenbeschaffenheit der Dosierkammer ist an die auszubringenden Produkte anpassbar.

Bevorzugt ist die Dosierkammer asymmetrisch oder auch zylindrisch ausgebildet.

Die Dosierkammer wirkt mit dem Wirkstoffbehältnisses z.B. einer Flasche beim Be- und Entlüften sowie beim Befüllen der Dosierkammer zusammen.

Dies bedeutet, das nur Flüssigkeit in die Dosierkammer läuft, wenn das System in Überkopfstellung zur Anwendung kommt und wenn gleichzeitig Luft in die Flasche gelangt, wobei ebenfalls zur gleichen Zeit die Dosierkammer entlüftet werden muss.

Um die Flüssigkeit aus der Dosierkammer ausströmen zu lassen, wird die Dosiertrommel manuell ca. 90°- 180° radial gedreht.

In diesem Zustand befindet sich die Dosierkammer über der Austrittsöffnung des Tropfendosierers und der Flüssigkeitszufluss aus dem Wirkstoffbehältnis ist verschlossen.

Über eine Luftverzweigung der Flaschenbelüftung wird in dieser Position Luft hinter das gefüllt Volumen in der Dosiertrommel und Dosierkammer geführt, so dass das dosierte Tropfenvolumen über die Austrittsöffnung ausströmen kann.

Die Dosiertrommel besteht aus einem Teil mit einem Betätigungselement zum Drehen der Trommel.

Die Dosiertrommel wird vom Tubendosiergehäuse umschlossen, wobei im unteren Bereich zur Flasche eine abdichtende Scheibe mit dem Flüssigkeitszulauf und der Flaschenbelüftungsbohrung das System zur Flasche abdichtet.

Seitlich am Tubendosiergehäuse ist ein radialer Schlitz, um die Dosiertrommel über das Betätigungselement zu drehen.

Der Tubendosierer wird mit einer Schutzkappe zur Atmosphäre abgedichtet und gegen Verschmutzung geschützt.

Um dem Anwender die Funktion des Systems zu erleichtern, zeigen Symbole auf dem Betätigungselement in Verbindung mit der Außenwand des Tropfendosierers die Position des Betätigungselementes an z.B. "Fill" für die Vorfüllposition, die Zahl 10 für 10 Tropfen und den Flüssigkeitsausguss in Form eines auslaufenden Tropfens.

Der Tropfendosierer besteht aus 3 - 4 Teilen, dem Tropfendosiergehäuse, der Dosiertrommel mit Betätigungselement und der Abdichtscheibe zum Wirkstoffbehältnis.

Das System kann mit einer Schraub- oder Steckschutzkappe versehen werden.

### Figurenbeschreibung

Weitere Vorteile, Merkmale und Einzelheiten ergeben sich aus der nachfolgenden Beschreibung bevorzugter Ausführungsbeispiele.

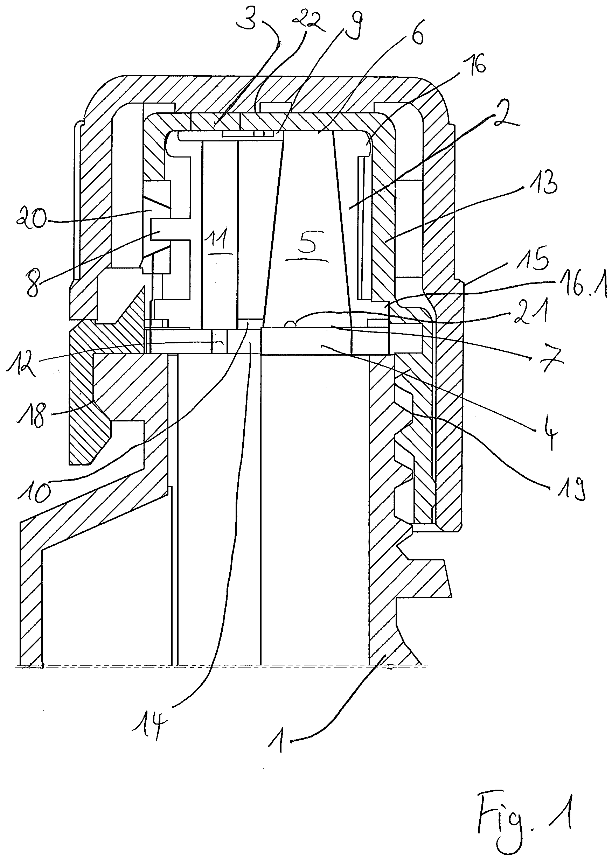

Figur 1 zeigt eine geschnittene Ansicht einer Vorrichtung zum Ausbringen eines flüssigen Mediums 26 mit einem Behältnis 1 und einer Schutzkappe 15, wobei bezüglich eines Gehäuses 13 und des Behältnisses 1 zwei theoretisch mögliche Ausführungsformen in dieser Figur aus Anschauungsgründen in Kombination dargestellt sind.

Das erste Ausführungsbeispiel zeigt einen Krimpverschluss 18 zwischen dem Behältnis 1 und dem entsprechend ausgeformten Gehäuse 13.
Das zweite Ausführungsbeispiel zeigt einen Gewindeverschluss 19 zwischen dem Behältnis 1 und dem entsprechend mit einem Gewinde versehenem Gehäuse 13. Die Schutzkappe 15 ist jeweils entsprechende der beiden Ausführungsbeispiele angepasst.

Das Gehäuse 13 umfasst einen Drehschieberschlitz 20, einen Trommelauslass 3 und eine Systembelüftung 22, die abbildungsbedingt nicht dargestellt ist. Innerhalb des Gehäuses 13 ist eine Dosiertrommel 2 drehbeweglich angeordnet, welche in einer ersten Arbeitsposition dargestellt ist.

Die Dosiertrommel 2 weist eine Dosierkammer 5, einen Belüftungskanal 11 und, in dieser Ausführungsform, einen Drehschieber 8 auf. Die Dosierkammer 5 und der Belüftungskanal 11 sind jeweils exzentrisch in der Dosiertrommel 5 verortet. Weiterhin verfügt die Dosiertrommel 2 in dem dargestellten Ausführungsbeispiel über zwei umlaufenden Dichtungen 16 und 16.1, welche die Dosiertrommel 2 zu dem Gehäuse 13 hin abdichten.

Die Dosierkammer 5 verfügt über einen Kammereinlass 7 und einen Kammerauslass 6. Der Kammereinlass 7 ist zum Behältnis 1 ausgerichtet, der Kammerauslass 6 liegt gegenüber und ist entsprechende von dem Behältnis 1 angewandt. Der Kammereinlass 7 stellt, in der gezeigten ersten Arbeitsposition, über einen Trommeleinlass 4 einer Dichtscheibe 14, eine Verbindung zu dem Behältnis 1 her.

Die Dosierkammer 5 ist derart ausgeformt, dass sie sich von dem Kammereinlass 7 zu dem Kammerauslass 6 hin verjüngt.
Weiterhin ist eine halbkreisförmige Bypassöffnung 21 an dem Kammereinlass 7 der Dosierkammer 5 angeordnet. In einer nicht gezeigten zweiten Arbeitsposition, wird über diese Bypassöffnung 21 ein Kontakt zwischen einem zweiten Bypass 10 und dem Belüftungskanal 11 hergestellt.

An dem Kammerauslass 6 der Dosierkammer 5 ist zudem ein erster Bypass 9 angeordnet. Der erste Bypass 9 stellt eine Verbindung zu dem Belüftungskanal 11 bzw. zu dem Trommelauslass 3 dar, so dass beim Befüllen der Dosierkammer 5 mit einem Medium 26 aus dem Behältnis 1, Luft aus der Dosierkammer 5 entweichen kann.

In der zweiten, nicht dargestellten Arbeitsposition, ist der Belüftungskanal 11 bzw. der erste Bypass 9, mit der nicht dargestellten Systembelüftung 22 des Gehäuses 13 verbunden.

Der Drehschieber 8 greift von innen in den Drehschieberschlitz 20 ein, so dass von außerhalb des Gehäuses 13 der Drehschiebers 8 verschoben werden kann, wodurch die Dosiertrommel 2 im Gehäuse 13 gedreht wird. Dadurch kann von der ersten in die zweite Arbeitsposition gewechselt werden.

Die Dichtscheibe 14 trennt die Dosiertrommel 2 von dem Behältnis 1 und ist unbeweglich zum Behältnis 1 und dem Gehäuse 13 angeordnet. Eine Belüftungsöffnung 12 und der Trommeleinlass 4 sind ebenfalls exzentrisch auf der Dichtscheibe 14 angeordnet.

Der Belüftungskanal 11 ist in diesem Ausführungsbeispiel röhrenförmig ausgestaltet und verbindet, in der dargestellten ersten Arbeitsposition, den Trommelauslass 3 des Gehäuses 13 mit der Belüftungsöffnung 12 der Dichtscheibe 14 und damit mit dem Inneren des Behältnisses 1.

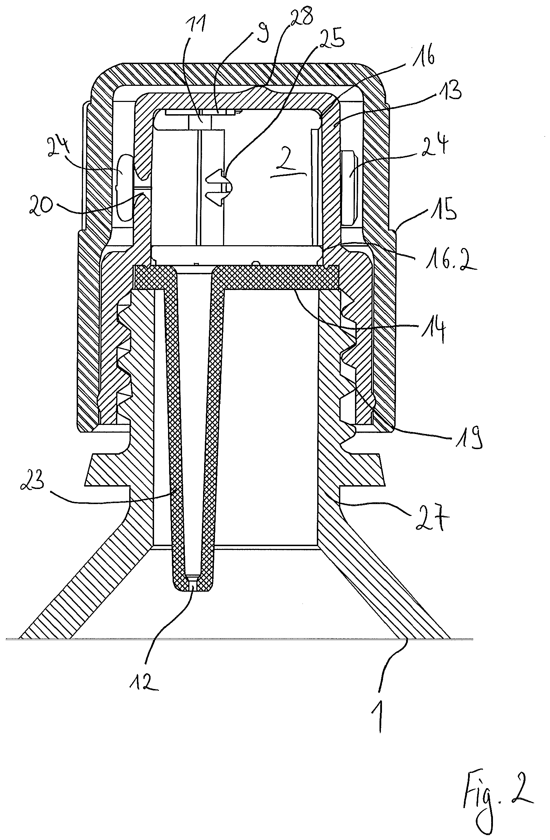

In Figur 2 ist ein weiteres Ausführungsbeispiel einer Vorrichtung zum Ausbringen eines flüssigen Mediums 26 mit einem Behältnis 1 und einer Schutzkappe 15 in einer geschnittenen Ansicht dargestellt.
Hier ist ersichtlich, dass die Dichtscheibe 14 an der Stelle der Belüftungsöffnung 12 eine zusätzliche Belüftungsröhre 23 aufweist. Die Belüftungsröhre 12 reicht in das Innere des Behältnisses 1 und überbrückt den länglichen Behältnishals 27 mit dem Gewindeverschluss 19.

Einen weiteren ausführungsformbedingten Unterschied weist das Gehäuse 13 auf, welches über eine Wulst 28 verfügt, die einen Auflagepunkt zur Schutzkappe 15 bildet.

Weitere in dieser Figur erkennbare Unterschiede zur Ausführungsform aus Figur 1 betreffen die Dosiertrommel 2. Diese verfügt anstatt des Drehschiebers 8 über einen Trommelschieber 24. Der Trommelschieber 24 ist nicht Bestandteil der Dosiertrommel 2. Der Trommelschieber wird von außen als separates Bauteil durch den Drehschieberschlitz 20 des Gehäuses 13 mit der Dosiertrommel 2 verbunden. Der Trommelschieber 24 ist halbkreisförmig und verläuft zur Hälfte um das Gehäuse 13 herum. Dies ist in den folgenden Figuren verdeutlicht dargestellt.

Darüber hinaus verfügt die Dosiertrommel 2 über eine Trommelschieberraste 25. Zudem ist die Dichtung 16.2 im Vergleich zur Dichtung 16.1 aus Figur 1 leicht variierend ausgeprägt.

Weiter Elemente der Dosiertrommel 2, wie beispielsweise die Dosierkammer 5, sind abbildungsbedingt nicht dargestellt. Abgesehen von den beschriebenen Unterschieden ist der Aufbau und die Funktion in diesem Ausführungsbeispiel identisch mit dem in Figur 1 beschriebenen Ausführungsbeispiel.

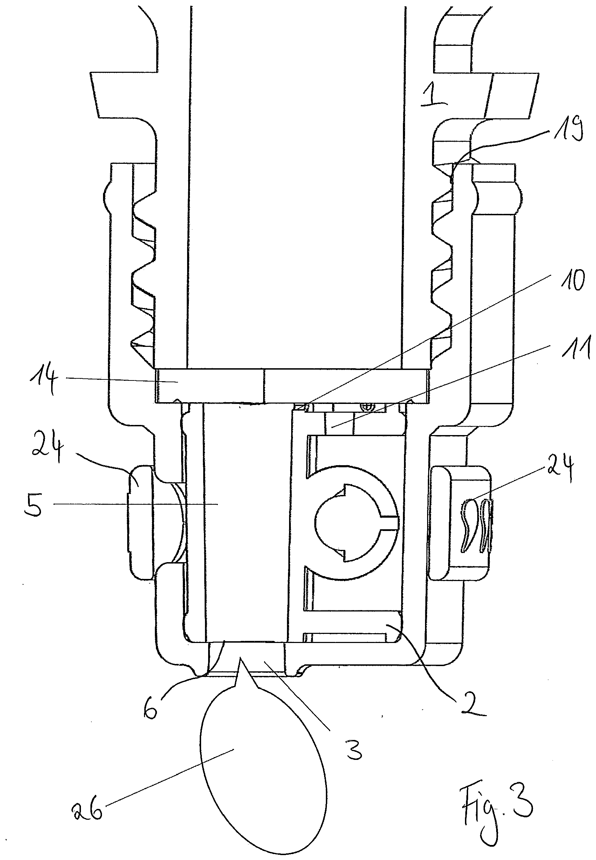

In Figur 3 ist ein weiteres Ausführungsbeispiel einer Vorrichtung zum Ausbringen des flüssigen Mediums 26 mit dem Behältnis 1 in einer geschnittenen Ansicht dargestellt. In diesem Ausführungsbeispiel ist die Situation der zweiten Arbeitsposition dargestellt, in der die Dosiertrommel 2 den nicht sichtbaren Kammereinlass 7 schliesst und den Trommelauslass 3 mit dem Kammerauslass 6 verbindet. Dabei erfolgt eine weitere Belüftung der Dosierkammer 5 über den zweiten Bypass 10 und den Belüftungskanal 11, der mit der abbildungsbedingt nicht zu sehenden Systembelüftung 22 verbunden ist, so dass das Medium 26 aus der Dosierkammer 5 ausfliessen kann.

Weiterhin ist der halbkreisförmige Trommelschieber 25 zu erkennen. In diesem Ausführungsbeispiel ist der Gewindeverschluss 19 verwendet worden und die Dichtscheibe 14 entspricht der ebenfalls in Figur 1 gezeigten Ausführung.

In Figur 4 ist eine Vorrichtung zum Ausbringen des flüssigen Mediums 26 mit dem Behältnis 1 dargestellt. Gezeigt ist, wie bereits in Figur 3 dargestellt, die Situation der zweiten Arbeitsstellung, bei der das Medium 26 aus der nicht zu sehende Dosierkammer 5 und über den Trommelauslass 3 ausfliesst. Weiterhin ist hier der Trommelschieber 24 zu sehen, wie er halbkreisförmig um das Gehäuse 13 herum angeordnet ist. Die Verbindung zum Behältnis 1 wird auch hier über einen Gewindeverschluss 19 hergestellt.

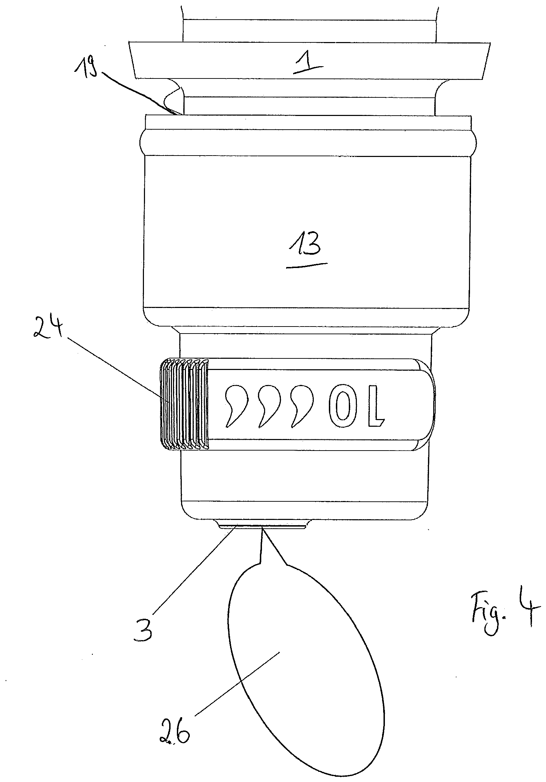

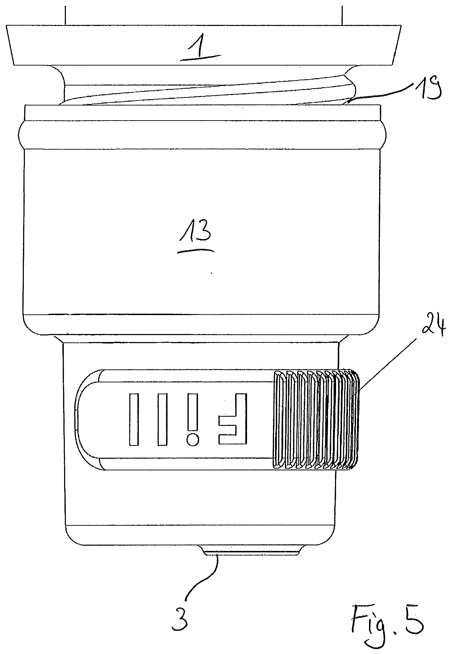

In Figur 5 ist ebenfalls eine ungeschnittene Ansicht einer Vorrichtung zum Ausbringen des flüssigen Mediums 26 mit dem Behältnis 1 dargestellt. In Abgrenzung zu der dargestellten Situation aus Figur 4, ist hier die Situation der ersten Arbeitsposition dargestellt. Dabei ist der Trommeleinlass 4 mit dem Kammereinlass 7 verbunden und den Kammerauslass 6 geschlossen, wobei die Belüftung des Behältnisses 1 über die Belüftungsöffnung 12 bzw. den Belüftungskanal 11 bzw. den Trommelauslass 3 erfolgt. Eine Entlüftung der Dosierkammer 5 erfolgt über den ersten Bypass 9. Abbildungsbeding ist dies nicht zu sehen, dies kann aber in der Darstellung in Figur 1 nachvollzogen werden.

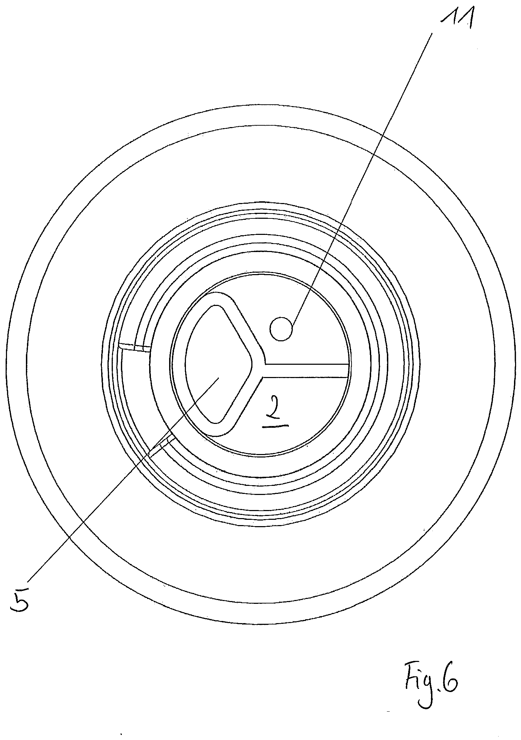

Die Figur 6 zeigt einen Radialschnitt einer Vorrichtung zum Ausbringen des flüssigen Mediums 26 durch die Dosierkammer 5 mit einem Blick in die Dosiertrommel 2 sowie den Belüftungskanal 11.

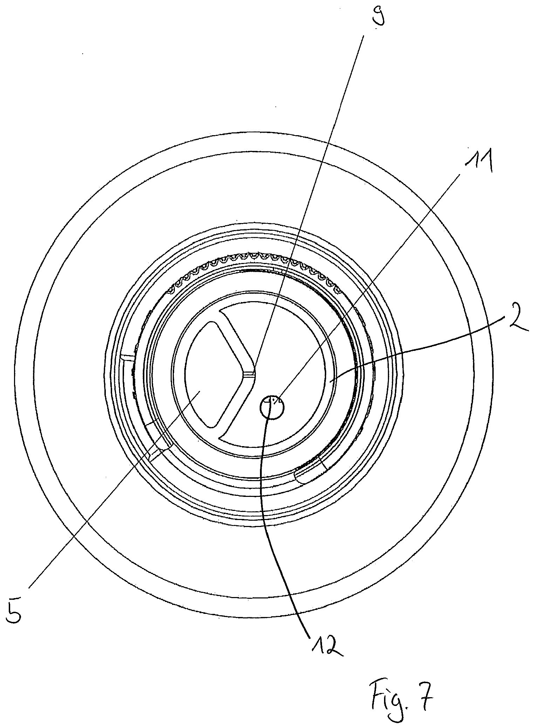

Figur 7 zeigt einen Radialschnitt durch eine Vorrichtung zum Ausbringen des flüssigen Mediums 26. Dieser Radialschnitt erlaubt den Blick durch den Belüftungskanal 11 auf die Belüftungsöffnung 12. Zudem ist der erste Bypass 9 dargestellt.

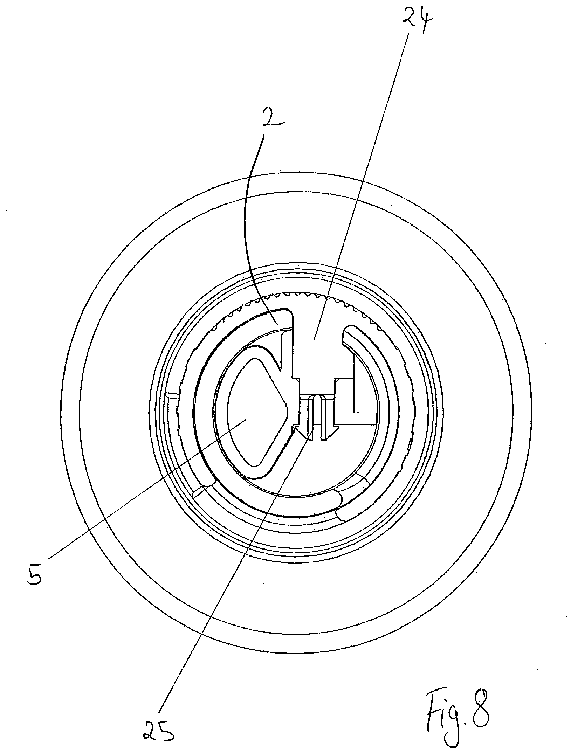

In Figur 8 ist ein Radialschnitt durch eine Vorrichtung zum Ausbringen des flüssigen Mediums 26 im Bereich des Trommelschiebers 24, der Trommelschieberraste 25 sowie der Dosierkammer 5 dargestellt.

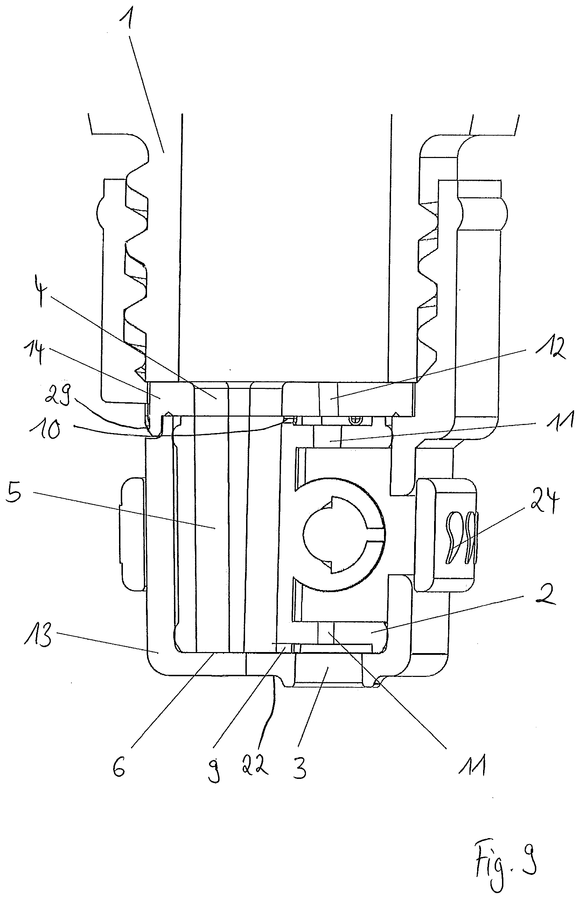

In der Figur 9 wird die erste Arbeitsposition einer Vorrichtung zum Ausbringen des flüssigen Mediums 26 im Längsschnitt in einer Überkopfstellung dargestellt. In dieser Lage läuft das Medium 26 aus dem Behältnis 1 über die Dichtscheibe 14 mit dem Trommeleinlass 4 in die Dosierkammer 5, wobei die Entlüftung der Dosierkammer 5 über den ersten Bypass 9 erfolgt. Die Behältnisbelüftung erfolgt über die Belüftungsöffnung 12 der Dichtscheibe 14 und über den Belüftungskanal 11 und über den Trommelauslass 3.

Die Dichtscheibe 14 mit der Belüftungsöffnung 12 dichtet auch das System zum Behältnis 1 und zur Atmosphäre ab, wobei die Geometrie der Dichtscheibe 14 mit einem Zentrierelement 29 versehen ist und dadurch zum Gehäuse 13 und dem Behältnis 1 verdrehsicher ist.

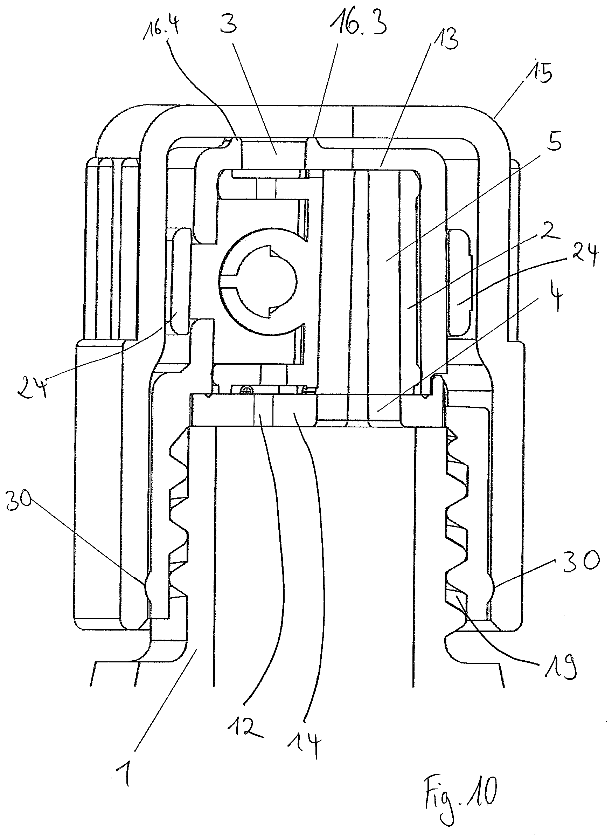

In Figur 10 ist eine Vorrichtung zum Ausbringen des flüssigen Mediums 26 als Längsschnitt mit abdichtenden Dichtungen 16.3 und 16.4, der Schutzkappe 15 sowie der Schutzkappenverankerung 17 dargestellt. Der Schnitt zeigt das System in der ersten Arbeitsposition aufgeschraubt auf das Behältnis 1.

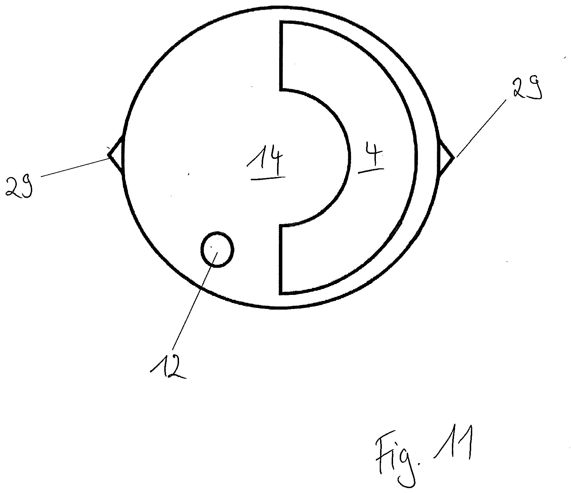

In Figur 11 ist eine Draufsicht auf die Dichtscheibe 14 mit dem Trommeleinlass 4, der Belüftungsöffnung 12 und den beiden Zentrierelementen 29 zu sehen. Der Trommeleinlass 4 und die Belüftungsöffnung 12 sind exzentrisch auf der Dichtscheibe 14 angeordnet.

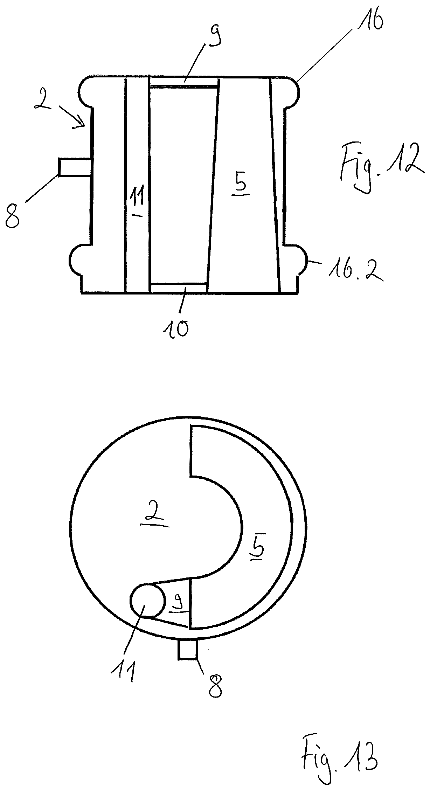

In Figur 12 ist eine geschnittene Seitenansicht der Dosiertrommel 2 dargestellt. Diese umfasst den Drehschieber 8, den Belüftungskanal 11, die Dosierkammer 5, die Dichtungen 16 und 16.2 sowie den ersten Bypass 9 und den zweiten Bypass 10, die den Belüftungskanal 11 und die Dosierkammer 5 verbinden.

In Figur 13 ist eine Draufsicht auf die Dosiertrommel 2 zu sehen. Dabei ist die Dosierkammer 5, der Belüftungskanal 11, der erste Bypass 9 und der aussen anliegende Drehschieber 8 zu sehen.

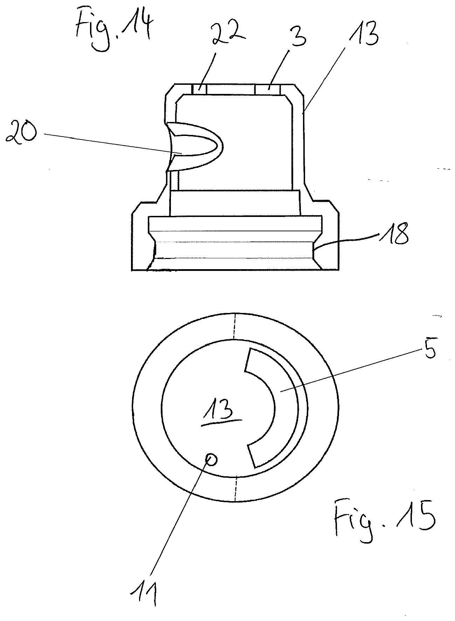

In Figur 14 ist eine geschnittene Seitenansicht des Gehäuses 13 dargestellt. Das Gehäuse 13 umfasst in diesem Ausführungsbeispiel den Krimpverschluss 18 über welchen es mit dem Behältnis 1 verbunden wird. Weiterhin ist der Drehschieberschlitz 20 dargestellt sowie der Trommelauslass 3 und die Systembelüftung 22.

In Figur 15 ist eine geschnittene Draufsicht auf das Gehäuses 13 zu sehen. Hier ist gut die exzentrische Anordnung der Dosierkammer 5 und der Belüftungskanals 11 im inneren des Gehäuses 13 zu sehen.

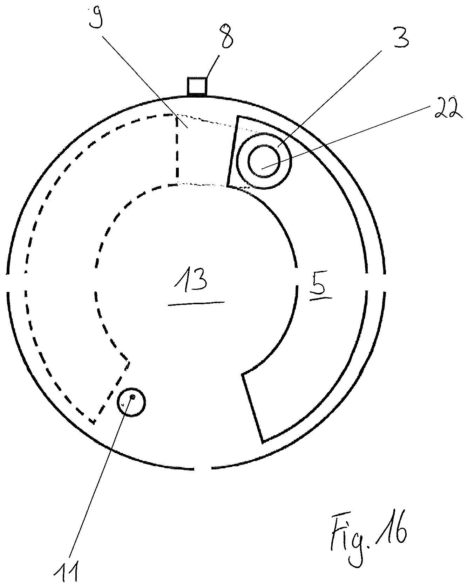

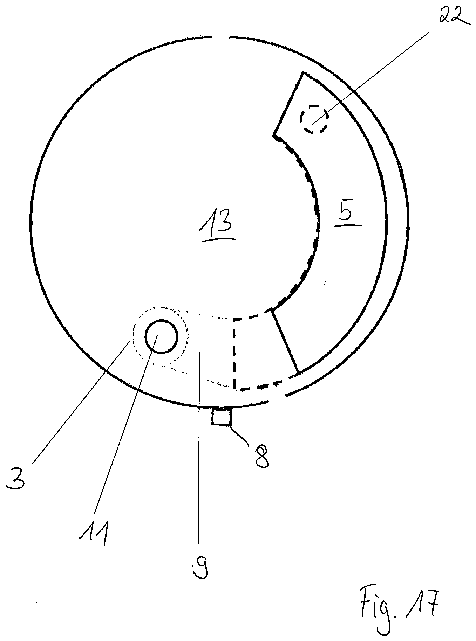

In Figur 16 und Figur 17 ist eine geschnittene Draufsicht auf das Gehäuse 13 und Teile der Dosiertrommel 2 zu sehen. Durch die gestrichelten Linien wird die Drehbewegung von der Dosiertrommel 2 zum feststehenden Gehäuse 13 dargestellt. Alle dort gezeigten Bestandteile sind in den vorherigen Figuren bereits mehrfach beschrieben worden.

**Bezugszeichenliste**

| | | | |
|---|---|---|---|
| 1, 1.1 | Behältnis | 34 | |
| 2 | Dosiertrommel | 35 | |
| 3 | Trommelauslass | 36 | |
| 4 | Trommeleinlass | 37 | |
| 5 | Dosierkammer | 38 | |
| 6 | Kammerauslass | 39 | |
| 7 | Kammereinlass | 40 | |
| 8 | Drehschieber | 41 | |
| 9 | erster Bypass | 42 | |
| 10 | zweiter Bypass | 43 | |
| 11 | Belüftungskanal | 44 | |
| 12 | Belüftungsöffnung | 45 | |
| 13 | Gehäuse | 46 | |
| 14 | Dichtscheibe | 47 | |
| 15 | Schutzkappe | 48 | |
| 16, 16.1, 16.2, 16.3, 16.4 | Dichtung | 49 | |
| 17 | Schutzkappenverankerung | 50 | |
| 18 | Krimpverschluss | 51 | |
| 19 | Gewindeverschluss | 52 | |
| 20 | Drehschieberschlitz | 53 | |
| 21 | Bypassöffnung | 54 | |
| 22 | Systembelüftung | 55 | |
| 23 | Belüftungsröhre | 56 | |
| 24 | Trommelschieber | 57 | |
| 25 | Trommelschieberraste | 58 | |
| 26 | Medium | 59 | |
| 27 | Behältnishals | 60 | |
| 28 | Wulst | 61 | |
| 29 | Zentrierelement | 62 | |
| 30 | | 63 | |
| 31 | | 64 | |
| 32 | | 65 | |
| 33 | | 66 | |

## Patentansprüche

1. Vorrichtung zum Ausbringen eines flüssigen Mediums (26) aus einem Behältnis (1) mit einem Gehäuse (13), einer darin aufgenommenen Dosiertrommel (2) und einer Dichtscheibe (14) wobei
- das Gehäuse (13) einen Trommelauslass (3) und eine Systembelüftung (22) aufweist, und
- die Dichtscheibe (14) eine Belüftungsöffnung (12) und einen Trommeleinlass (4) aufweist, wobei
- die Dosiertrommel (2) eine Dosierkammer (5), einen Kammerauslass (6) und einen Kammereinlass (7) aufweist, und wobei
- die Dosiertrommel (2) einen Belüftungskanal (11) umfasst,
**dadurch gekennzeichnet, dass**
die Dosiertrommel (2) einen Drehschieber (8) umfasst,
- wobei der Drehschieber (8) in einer ersten Arbeitsposition den Trommeleinlass (4) mit dem Kammereinlass (7) verbindet und den Kammerauslass (6) schliesst und dabei eine Belüftung des Behältnisses (1) und eine Entlüftung der Dosierkammer (5) erfolgt,
- und in einer zweiten Arbeitsposition die Dosiertrommel (2) den Kammereinlass (7) schliesst und den Trommelauslass (3) mit dem Kammerauslass (6) verbindet und dabei eine weitere Belüftung der Dosierkammer (5) erfolgt und der Belüftungskanal (11) mit der Systembelüftung (22) verbunden ist, wobei
an dem Kammerauslass (6) der Dosierkammer (5) ein erster Bypass (9) angeordnet ist, welcher in der ersten Arbeitsposition eine Verbindung zwischen der Dosierkammer (5) und dem Belüftungskanal (11) bzw. zu dem Trommelauslass (3) darstellt und eingerichtet ist, um in der ersten Arbeitsposition eine Entlüftung der Dosierkammer (5) zu ermöglichen, und wobei
die Dosiertrommel (2) einen zweiten Bypass (10) umfasst, der in der zweiten Arbeitsposition zwischen der Dosierkammer (5) und dem Belüftungskanal (11) angeordnet ist, um in der zweiten Arbeitsposition eine Belüftung der Dosierkammer (5) zu ermöglichen.

2. Vorrichtung nach Anspruch 1, **dadurch gekennzeichnet, dass** der Trommelauslass (3) einen Belüftungskanal (11) aufweist.

3. Vorrichtung nach Anspruch 1 oder 2, **dadurch gekennzeichnet, dass** die Dichtscheibe (14) zwischen dem Behältnis (1) und der Dosiertrommel (2) angeordnet ist, wobei die Dichtscheibe (14) statisch zu der Dosiertrommel (2) ist.

4. Vorrichtung nach einem der Ansprüche 2 oder 3, **dadurch gekennzeichnet, dass** der Belüftungskanal (11) in der ersten Arbeitsposition mit der Belüftungsöffnung (12) der Dichtscheibe (14) in Wirkverbindung bringbar ist.

5. Vorrichtung nach einem der vorigen Ansprüche, **dadurch gekennzeichnet, dass** die Dosierkammer (5) und der Kammereinlass (7) in der Dosiertrommel (2) exzentrisch angeordnet sind.

6. Vorrichtung nach einem der Ansprüche bis 5, **dadurch gekennzeichnet, dass** der Belüftungskanal (11) in der Dosiertrommel (2) exzentrisch angeordnet ist.

7. Vorrichtung nach einem der Ansprüche bis 6, **dadurch gekennzeichnet, dass** die Belüftngsöffnung (12) und der Trommeleinlass (4) in der Dichtscheibe (14) exzentrisch angeordnet ist.

8. Vorrichtung nach einem der vorigen Ansprüche, **dadurch gekennzeichnet, dass** die Dosierkammer (5) von dem Kammereinlass (7) zu dem Kammerauslass (6) verjüngt ist.

9. Vorrichtung nach einem der vorigen Ansprüche, **dadurch gekennzeichnet, dass** die Dosiertrommel (2) in dem Gehäuse (13) drehbar angeordnet ist.

10. Vorrichtung nach einem der vorigen Ansprüche, **dadurch gekennzeichnet, dass** die Dosiertrommel (2) zu dem Gehäuse (13) abgedichtet ist.

11. Verwendung einer Vorrichtung nach den Ansprüchen 1 bis 10 **gekennzeichnet durch** folgende Schritte:
- die Vorrichtung wird in eine Füllstellung gebracht;
- der Drehschieber wird in die erste Arbeitsposition gedreht, sodass die Dosierkammer (5) aus dem Behältnis (1) gefüllt wird;
- der Drehschieber wird in die zweite Arbeitsposition gedreht, sodass die Dosierkammer (5) über den Trommelauslass (3) entleert wird.

## Claims

1. Device for dispensing a liquid medium (26) from a container (1) having a housing (13), a metering drum (2) accommodated therein and a sealing disc (14), wherein
- the housing (13) has a drum outlet (3) and a system aeration facility (22), and
- the sealing disc (14) has a aeration opening (12) and a drum inlet (4), wherein
- the metering drum (2) has a metering chamber (5), a chamber outlet (6) and a chamber inlet (7), and wherein
- the metering drum (2) comprises an aeration duct (11)
**characterized in, that**
the metering drum (2) comprises a rotary valve (8),
- wherein, in a first working position, the rotary valve (8) connects the drum inlet (4) to the chamber inlet (7) and closes the chamber outlet (6), thereby an aeration of the container (1) and a de-aeration of the metering chamber (5) is taking place,
- and, in a second working position, the metering drum (2) closes the chamber inlet (7) and connects the drum outlet (3) to the chamber outlet (6), thereby a further aeration of the metering chamber (5) is taking place and the aeration duct (11) is connected to the system aeration facility (22), wherein
a first bypass (9) is arranged at the chamber outlet (6) of the metering chamber (5), which, in the first working position, represents a connection between the metering chamber (5) and the aeration duct (11) or to the drum outlet (3) and is arranged to enable a de-aeration of the metering chamber (5) in the first working position, and wherein
the metering drum (2) comprises a second bypass (10) which, in the second working position, is arranged between the metering chamber (5) and the aeration duct (11) in order to allow aeration of the metering chamber (5) in the second working position.

2. Device according to claim 1, **characterized in that** the drum outlet (3) has a aeration duct (11).

3. Device according to claim 1 or 2, **characterized in that** the sealing disc (14) is arranged between the container (1) and the metering drum (2), wherein the sealing disc (14) is static to the metering drum (2).

4. Device according to one of claims 2 or 3, **characterized in that** the aeration duct (11) can be brought into operative connection with the aeration opening (12) of the sealing disc (14) in the first working position.

5. Device according to one of the previous claims, **characterized in that** the metering chamber (5) and the chamber inlet (7) are arranged eccentrically in the metering drum (2).

6. Device according to one of claims 2 to 5, **characterized in that** the aeration duct (11) is arranged eccentrically in the metering drum (2).

7. Device according to one of claims 2 to 6, **characterized in that** the aeration opening (12) and the drum inlet (4) are arranged eccentrically in the sealing disc (14).

8. Device according to one of the previous claims, **characterized in that** the metering chamber (5) is tapered from the chamber inlet (7) to the chamber outlet (6).

9. Device according to one of the previous claims, **characterized in that** the metering drum (2) is rotatably arranged in the housing (13).

10. Device according to one of the previous claims, **characterized in that** the metering drum (2) is sealed to the housing (13).

11. Use of a device according to claims 1 to 10
**characterized by** the following steps:
- the device is brought into a filling position;
- the rotary valve 8 is rotated into the first working position so that the metering chamber (5) is filled from the container (1);
- the rotary valve is rotated into the second working position so that the metering chamber (5) is emptied via the drum outlet (3).

## Revendications

1. Dispositif de distribution d'un milieu liquide (26) à partir d'un récipient (1) avec un boîtier (13), un tambour de dosage (2) reçu à l'intérieur de ce dernier et une bague d'étanchéité (14), dans lequel
- le boîtier (13) présente une sortie de tambour (3) et une ventilation de système (22), et
- la bague d'étanchéité (14) présente une ouverture de ventilation (12) et une entrée de tambour (4),
- dans lequel le tambour de dosage (2) présente une chambre de dosage (5), une sortie de chambre (6) et une entrée de chambre (7), et
- dans lequel le tambour de dosage (2) comporte un canal de ventilation (11),
**caractérisé par le fait que**
le tambour de dosage (2) comporte une soupape rotative (8),
- dans lequel la soupape rotative (8) connecte, dans une première position de travail, l'entrée de tambour (4) à l'entrée de chambre (7) et ferme la sortie de chambre (6), et ont lieu ainsi une ventilation du récipient (1) et une purge d'air de la chambre de dosage (5),
- et, dans une deuxième position de travail, le tambour de dosage (2) ferme l'entrée de chambre (7) et connecte la sortie de tambour (3) à la sortie de chambre (6) et, de ce fait, a lieu une autre ventilation de la chambre de dosage (5) et le canal de ventilation (11) est connecté au système de ventilation (22),
dans lequel est disposée, à la sortie de chambre (6) de la chambre de dosage (5), une première dérivation (9) qui, dans la première position de travail, représente une connexion entre la chambre de dosage (5) et le canal de ventilation (11) ou la sortie de tambour (3) et est aménagée pour permettre, dans la première position de travail, une purge d'air de la chambre de dosage (5), et
dans lequel le tambour de dosage (2) comporte une deuxième dérivation (10) qui est disposée, dans la deuxième position de travail, entre la chambre de dosage (5) et le conduit de ventilation (11), pour permettre, dans la deuxième position de travail, une ventilation de la chambre de dosage (5).

2. Dispositif selon la revendication 1, **caractérisé par le fait que** la sortie de tambour (3) présente un canal de ventilation (11).

3. Dispositif selon la revendication 1 ou 2, **caractérisé par le fait que** la bague d'étanchéité (14) est disposée entre le récipient (1) et le tambour de dosage (2), dans lequel la bague d'étanchéité (14) est statique par rapport au tambour de dosage (2).

4. Dispositif selon l'une des revendications 2 ou 3,
**caractérisé par le fait**
**que** le canal de ventilation (11) peut, dans la première position de travail, être amené en connexion opérationnelle avec l'ouverture de ventilation (12) de la bague d'étanchéité (14).

5. Dispositif selon l'une des revendications précédentes, **caractérisé par le fait que** la chambre de dosage (5) et l'entrée de chambre (7) dans le tambour de dosage (2) sont disposées de manière excentrique.

6. Dispositif selon l'une des revendications 2 à 5, **caractérisé par le fait que** le canal de ventilation (11) dans le tambour de dosage (2) est disposé de manière excentrique.

7. Dispositif selon l'une des revendications 2 à 6, **caractérisé par le fait que** l'ouverture de ventilation (12) et l'entrée du tambour (4) dans le disque d'étanchéité (14) sont disposées de manière excentrique.

8. Dispositif selon l'une des revendications précédentes, **caractérisé par le fait que** la chambre de dosage (5) est effilée de l'entrée de chambre (7) à la sortie de chambre (6).

9. Dispositif selon l'une des revendications précédentes, **caractérisé par le fait que** le tambour de dosage (2) est disposé de manière rotative dans le boîtier (13).

10. Dispositif selon l'une des revendications précédentes, **caractérisé par le fait que** le tambour doseur (2) est étanche par rapport au boîtier (13).

11. Utilisation d'un dispositif selon les revendications 1 à 10, **caractérisée par** les étapes suivantes consistant en ce que:
- le dispositif est amené en une position de remplissage;
- la soupape rotative est tournée vers la première position de travail, de sorte que la chambre de dosage (5) soit remplie à partir du récipient (1);
- la soupape rotative est tournée vers la deuxième position de travail, de sorte que la chambre de dosage (5) soit vidée par l'intermédiaire de la sortie de tambour (3).
